# EUROPEAN PATENT APPLICATION

(11) **EP 2 927 332 A1**
(43) Date of publication of application: **07.10.2015**
(21) Application number: 13858678.9
(22) Date of filing: 22.11.2013
(51) Int. Cl.: C22B 3/44, C02F 1/66, C22B 23/00

(54) **NEUTRALIZATION TREATMENT METHOD AND NEUTRALIZING AGENT**

(30) Priority: 28.11.2012 JP 2012260034
(71) Applicant: Sumitomo Metal Mining Co., Ltd., Tokyo 105-8716 (JP)
(72) Inventor: NAKAI, Takayuki, Tokyo 105-8716 (JP); MATSUBARA, Satoshi, Tokyo 105-8716 (JP); NAKAI, Osamu, Tokyo 105-8716 (JP); NAKASHIMA, Takeshi, Tokyo 105-8716 (JP)
(74) Representative: Müller-Boré & Partner Patentanwälte PartG mbB
(86) International application number: PCT/JP2013/081470
(87) International publication number: WO 2014/084129

(57) **Abstract**

Provided is a neutralization treatment method capable of performing an efficient neutralization treatment with the reduction of the amount of a neutralizing agent to be used such as slaked lime in a neutralization treatment that is performed in order to discharge a process liquid generated in a metal smelting or hydrometallurgy process to the outside of the system. The neutralization treatment is performed for a liquid discharged in a metal smelting or hydrometallurgy process by using as a neutralizing agent boiler ash that is obtained after combustion of a fluidized-bed boiler and is obtained by burning of a sulfur content derived from coal being a fuel while adding lime stone to the sulfur content and desulfurizing the sulfur content.

## Description

### Technical Field

The present invention relates to a neutralization treatment method and a neutralizing agent, more specifically, a neutralization treatment method capable of efficiently performing a final neutralization treatment for a process liquid discharged in a metal smelting or hydrometallurgy process, and a neutralizing agent used for the neutralization treatment. The present application claims a priority based on Japanese Patent Application No. 2012-260034 filled on November 28, 2012 in Japan, and this Application is incorporated into the present application by reference.

### Background Art

In a process liquid generated from a smelting process of a metal such as nickel and copper, many heavy metals are contained, therefore, in order to discharge the process liquid into the environment (outside of the system), it is required to remove the heavy metals and further to perform a waste water treatment (neutralization treatment) in which the pH is adjusted to the vicinity of the neutrality.

Specifically, in the neutralization treatment, the pH is increased by the addition of a neutralizing agent into an acidic process liquid generated, heavy metals contained in the liquid are solidified as hydroxides, and the solid and the liquid are separated by the operation of a filtration treatment and the like. Further, the solution after the solid-liquid separation is discharged (drained) or reused, and on the other hand, the solid containing metal components is treated in a dumping ground.

So far, in a neutralization treatment for a process liquid, for example, it has been common to perform a treatment, for example, by using a calcium-based neutralizing agent such as lime stone, and slaked lime. These neutralizing agents are relatively inexpensive, however, the amount of the neutralizing agent to be used (required amount) has been increased along with the increased amount of the process liquid to be treated.

As described above, the amount of a neutralizing agent to be used varies depending on the amount of a process liquid to be treated and further depending on the acidity of a process liquid, the concentration of heavy metals contained, and the like. However, also in any metal smelting or hydrometallurgy process, it is desired to reduce the amount of a neutralizing agent to be used from the viewpoint of cost reduction.

### Prior Art Documents

### Patent Documents

Patent document 1: Japanese Patent Application Laid-Open (JP-A) No. H06-205931
Patent document 2: JP-A No. H10-026334
Patent document 3: JP-A No. 2009-095698

### Summary of the Invention

### Problems to be Solved by the Invention

Accordingly, the present invention was made in consideration of the above circumstances, and is to provide a neutralization treatment method capable of performing an efficient neutralization treatment with the reduction of the amount of a neutralizing agent to be used such as slaked lime in a neutralization treatment (final neutralization treatment) that is performed in order to discharge a process liquid generated in a metal smelting or hydrometallurgy process to the outside of the system. Means to Solve the Problems

As a result of the intensive studies by the present inventors in order to solve the problems described above, the present inventors found that the amount of a neutralizing agent such as slaked lime to be used, which is used in a neutralization treatment for a process liquid, can effectively be reduced by using as a neutralizing agent boiler ash that is obtained after combustion of a fluidized-bed boiler, and thus have completed the present invention.

That is, the neutralization treatment method according to the present invention is characterized in that a neutralization treatment is performed by using as a neutralizing agent boiler ash being obtained after combustion of a fluidized-bed boiler and being obtained by burning of a sulfur content derived from coal being a fuel while adding lime stone to the sulfur content and desulfurizing the sulfur content, in a neutralization treatment method for a liquid discharged in a metal smelting or hydrometallurgy process.

Herein, a boiler ash slurry being a slurry of the above-mentioned boiler ash is preferably used as a neutralizing agent. Further, the above-mentioned boiler ash slurry has preferably a slurry concentration of 4.0 % by weight or less.

The above-mentioned metal smelting or hydrometallurgy process is a hydrometallurgy process in which nickel and cobalt are recovered from a nickel oxide ore, and can be applied for a neutralization treatment for a solution after sulfurization treatment, which is obtained through a leaching step, a solid-liquid separation step, a neutralization step, and a sulfurization step.

Further, the neutralizing agent according to the present invention is a neutralizing agent used for a neutralization treatment for a liquid discharged in a metal smelting or hydrometallurgy process, and is characterized by including boiler ash being obtained after combustion of a fluidized-bed boiler and being obtained by burning of a sulfur content derived from coal being a fuel while adding lime stone to the sulfur content and desulfurizing the sulfur content.

### Advantageous Effects of the Invention

According to the present invention, in a neutralization treatment for a process liquid generated in a metal smelting or hydrometallurgy process, the amount of a neutralizing agent such as slaked lime to be used can be effectively reduced, and an efficient neutralization treatment can be performed.

### Brief Description of the Drawings

Fig. 1 is a process chart of a hydrometallurgy process of a nickel oxide ore.
Fig. 2 is a flow chart showing a flow of neutralization using fluidized-bed boiler ash as a neutralizing agent in a final neutralization treatment for a barren solution generated in a hydrometallurgy process of nickel.

### Description of the Embodiments

Hereinafter, a specific embodiment of the neutralization treatment method according to the present invention (hereinafter, referred to as "the present embodiment") will be described in detail in the following order. Further, the present invention is not limited to the following embodiment, and various changes may be made without departing from the spirit of the present invention.
1. Overview
2. Fluidized-bed boiler and boiler ash thereof
3. Neutralization treatment method
   3-1. Hydrometallurgy method for nickel oxide ore
   3-2. Neutralization treatment method

### <1. Overview>

The neutralization treatment method according to the present embodiment is, for example, a method of a neutralization treatment (hereinafter, also referred to as "final neutralization treatment") that is performed in order to discharge the process liquid discharged in a smelting process of a metal such as nickel and copper, and is capable of performing an efficient neutralization treatment with the reduction of the treatment cost.

Specifically, the neutralization treatment method according to the present embodiment is characterized by performing a neutralization treatment using as a neutralizing agent boiler ash that is obtained after combustion of a fluidized-bed boiler and is obtained by the burning of a sulfur content derived from coal being a fuel while adding lime stone to the sulfur content and desulfurizing the sulfur content.

Details will be described later, however, in a fluidized-bed boiler, in addition to coal being a boiler fuel, lime stone for a desulfurization treatment to remove the sulfur content of the coal is charged and burned. From this, in the fluidized-bed boiler ash, Ca derived from the lime stone that is charged for the desulfurization treatment remains. Therefore, use of the fluidized-bed boiler ash for a neutralization treatment allows the neutralization for a process liquid to be performed with the Ca contained in the boiler ash.

According to such a neutralization treatment method, the amount of a neutralizing agent such as slaked lime to be used, which is charged and added to perform a neutralization treatment for a process liquid generated in a metal smelting or hydrometallurgy process, can effectively be reduced. This enables an efficient neutralization treatment to be performed.

Further, the fluidized-bed boiler ash has been generally wasted as industrial wastes so far. In addition, at the wasting, it has been required to perform a treatment specialized for the neutralization of the alkali because unreacted alkali content remains in the boiler ash. However, as in the present embodiment, use of the fluidized-bed boiler ash as a neutralizing agent for a neutralization treatment for a process liquid allows the waste amount from the boiler to be reduced, and further the alkali content in the boiler ash to effectively be utilized. This allows thus the treatment cost required for the waste treatment to effectively be reduced.

### <2. Fluidized-bed boiler and boiler ash thereof>

Herein, the boiler ash generated by combustion of a fluidized-bed boiler will be described in more detail.

In general, in a combustion method of a boiler using coal, for example, there are a fixed-bed system, an entrained bed system, a fluidized bed system, and the like. Specifically, in a fixed bed system, the charged massive coal is reacted with air in a stationary state and burned or gasified. However, in this fixed bed system, a large amount of excessive air is required for the burning, therefore, there is a limit to the apparatus because of having low boiler efficiency and being hardly enlarged in scale. Further, the entrained bed system is a method in which the dust coal charged in a boiler is jetted together with air and is burned. In this entrained bed system, the combustibility is favorable and the excessive air required is less, however, there is a limit that dust coal is required to be used.

On the other hand, the fluidized bed system is a system in which granular coal is charged into a fluidized bed of silica sand and the like that are floated and fluidized by air flow, and is burned. In this fluidized bed system, since the heat conduction in a fluidized bed is favorable, the boiler can be miniaturized, and further, the combustion at a low temperature of around 1000°C or lower as compared with a fixed bed system can be performed, therefore, there is an advantage that the concentration of NOx in combustion gas is low, and low-grade coal can be used.

In a boiler of this fluidized bed system (fluidized-bed boiler), a Ca source is charged and mixed together with a boiler fuel of coal in the furnace. The Ca source is used for a desulfurization treatment for desulfurization of the sulfur content derived from coal, and in the furnace, the coal is burned while desulfurizing the sulfur content, and boiler ash is generated. It is noted that as to a technique regarding to a fluidized-bed boiler, for example, there are disclosures in Patent Documents 1 to 3.

Meanwhile, as a Ca source to be used for the desulfurization treatment, an alkali component such as lime stone is used, and in order to ensure the desulfurization effect, the lime stone and the like are generally added in an excessive amount. Therefore, in the boiler ash discharged from the fluidized-bed boiler (boiler ash after in-furnace desulfurization), unreacted Ca that has not involved in the desulfurization remains.

Herein, Table 1 shows results of the experiment that was performed in order to find the amount of the residual Ca in the boiler ash after desulfurization in a fluidized-bed boiler. Specifically, in this experiment, a neutralization treatment by sulfuric acid is performed for the coal and Ca content ("coal + Ca content") in a state before the boiler combustion (before in-furnace desulfurization treatment), and the amount of the sulfuric acid required for the neutralization is measured. On the other hand, a neutralization treatment by sulfuric acid is performed for the boiler ash obtained after the boiler combustion (after in-furnace desulfurization treatment) in the same manner as in above, and the amount of the sulfuric acid consumed for the neutralization is measured. The amounts of the sulfuric acids were compared with each other.

**[Table 1]**

| | Amount of sulfuric acid required for neutralization of "coal + Ca content" before in-furnace desulfurization | Amount of sulfuric acid consumed for neutralization of boiler ash after in-furnace desulfurization | Ca residual ratio |
|---|---|---|---|
| Amount of sulfuric acid (mol) | 0.0270 | 0.0073 | 27% |

As a result, as shown in Table 1, the amount of the sulfuric acid required for the neutralization of the "coal + Ca content" before in-furnace desulfurization treatment was 0.0270 mol, and on the other hand, the amount of the sulfuric acid consumed for the neutralization of the boiler ash obtained after in-furnace desulfurization treatment was 0.0073 mol. From this, it was found that in the boiler ash, around 27% of the Ca source that is charged into the furnace remains unreacted.

Therefore, in the present embodiment, the Ca-remaining fluidized-bed boiler ash is used as a neutralizing agent, for example, for a neutralization treatment (final neutralization treatment) for a process liquid generated in a smelting process of a metal such as nickel and copper. This allows the Ca content in the boiler ash to effectively be utilized in a neutralization treatment, and the amount of the neutralizing agent to be used for the neutralization treatment, such as slaked lime, can effectively be reduced.

### <3. Neutralization treatment method>

Hereinafter, more specifically, the neutralization treatment method according to the present embodiment will be described. Herein, the neutralization treatment method according to the present embodiment will be described by way of an example in a case of applying to a neutralization treatment for a barren solution that is a process liquid generated in a hydrometallurgy process of a nickel oxide ore.

### <3-1. Hydrometallurgy method for nickel oxide ore>

First, an overview of a hydrometallurgy process (method) of a nickel oxide ore will be described. It is noted that herein, the overview will be described by using a hydrometallurgy method using a high-temperature high-pressure acid leaching process (HPAL process) as a specific example.

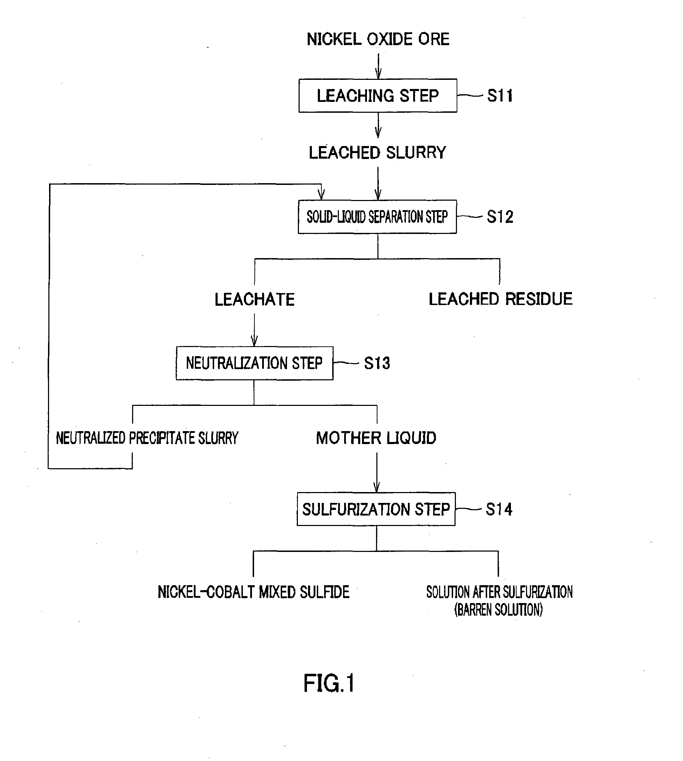

Fig. 1 is a process chart of a hydrometallurgy method using a high-temperature high-pressure acid leaching process of a nickel oxide ore. As shown in Fig. 1, the hydrometallurgy method for a nickel oxide ore includes: a leaching step S 11 in which nickel and cobalt are leached from a nickel oxide ore with low-grade nickel; a solid-liquid separation step S12 in which the resultant leach slurry is solid-liquid separated into a leachate and leach residues; a neutralization step S13 in which the leachate is neutralized, and separated into a mother liquid for the recovery of nickel and cobalt and a neutralized precipitate slurry; and a sulfurization step S 14 in which a sulfurization treatment is performed by the blowing of hydrogen sulfide gas into a sulfuric acid solution that is a mother liquid, and a mixed sulfide containing nickel and cobalt and a barren solution are obtained.

### (1) Leaching step

In a leaching step S 11, sulfuric acid is added into a slurry of a nickel oxide ore, and the resultant mixture is subjected to a stirring treatment at a temperature of 220 to 280°C to form a leach slurry containing a leachate and leach residues. In the leaching step S11, for example, a high temperature pressure vessel (autoclave) is used.

Examples of the nickel oxide ore used in the leaching step S11 include a so-called laterite ore mainly such as a limonite ore and a saprolite ore. The nickel content of the laterite ore is generally 0.8 to 2.5% by weight, and the nickel is contained as a hydroxide or a calcium silicate (magnesium silicate) ore. Further, the content of iron is 10 to 50% by weight, and the iron is mainly in a form of a trivalent hydroxide (goethite), and divalent iron is partly contained in the calcium silicate ore.

Specifically, in the leaching step S11, a leaching reaction and a high temperature heat hydrolysis reaction, which are represented by the following equations (1) to (5), are generated, and the leaching of the nickel, cobalt, and the like as a sulfate and the immobilization of the leach ferrous sulfate as hematite are performed. However, since the immobilization of a ferrous ion does not completely progress, therefore, generally, in a liquid portion of a leach slurry to be obtained, divalent and trivalent ferrous ions are contained in addition to the nickel, cobalt, and the like.

- Leaching Reaction

   MO + H₂SO₄ ⇒ MSO₄ + H₂O ··· (1)

   (In which, in the equation (1) M denotes Ni, Co, Fe, Zn, Cu, Mg, Cr, Mn, or the like.)

   2Fe(OH)₃ + 3H₂SO₄ ⇒ Fe₂(SO₄)₃ + 6H₂O ··· (2)

   FeO + H₂SO₄ ⇒ FeSO₄ + H₂O ··· (3)
- High temperature heat hydrolysis reaction

   2FeSO₄ + H₂SO₄ + 1/2O₂ ⇒ Fe₂(SO₄)₃ + H₂O ··· (4)

   Fe₂(SO₄)₃ + 3H₂O ⇒ Fe₂O₃ + 3H₂SO₄ ··· (5)

### (2) Solid-liquid separation step

In a solid-liquid separation step S12, a leach slurry formed in a leaching step S11 is subjected to multi-stage washing to obtain a leachate containing nickel and cobalt, and leach residues.

The multi-stage washing method in the solid-liquid separation step S12 is not particularly limited, however, a continuous counter current decantation method (CCD method) in which a washing liquid not containing nickel is brought into contact with a counter current is preferably used. This allows the washing liquid to be newly introduced into the system to be reduced, and further the recovery rate of the nickel and cobalt to be 95% or more.

### (3) Neutralization step

In a neutralization step S13, a neutralizing agent such as calcium carbonate is added into a leachate so that the pH of the leachate is 4.0 or less, and preferably 3.2 to 3.8 while preventing the oxidation of the separated leachate, and a mother liquid for the recovery of the nickel and cobalt and a neutralized precipitate slurry containing trivalent iron are formed. In the neutralization step S 13, a neutralization treatment for a leachate is performed as described above, consequently, the excessive acid used in the leaching step S11 according to high-temperature high-pressure acid leaching is neutralized, and further impurity components such as a trivalent ferrous ion and an aluminum ion, which remain in a solution, are removed. It is noted that when the pH of a leachate exceeds 4.0, a hydroxide of nickel is largely generated.

### (4) Sulfurization step

In a sulfurization step S 14, hydrogen sulfide gas is blown into a sulfuric acid solution that is a mother liquid for the recovery of nickel and cobalt, which is obtained in the neutralization step S 13, to generate a sulfurization reaction, and a mixed sulfide containing nickel and cobalt (nickel-cobalt mixed sulfide) and a solution after sulfurization (barren solution) are formed. It is noted that in a case where zinc is contained in a mother liquid, prior to the formation of a mixed sulfide of nickel and cobalt by a sulfurization reaction, a treatment in which zinc is selectively separated as a sulfide can be performed.

The mother liquid is a sulfuric acid aqueous solution containing nickel and cobalt, which is obtained by the neutralization treatment for a leachate as described above. Specifically, for example, the pH is 3.2 to 4.0, the nickel concentration is 2 to 5 g/L, and the cobalt concentration is 0.1 to 1.0 g/L, and further a sulfuric acid solution including impurity metal elements that contain at least one or more of, for example, iron, magnesium and manganese as impurity components can be used. The impurity metal component largely varies depending on the oxidation-reduction potential of the leaching, the operation condition of the autoclave, and the grade of the ore, however, in general, around several g/L of iron, magnesium, manganese, and other impurity metal elements are contained.

Herein, iron, manganese, an alkali metal, and an alkali earth metal such as magnesium, which are impurity metal components contained in the sulfuric acid aqueous solution, are present in a relatively large amount as compared with the nickel and cobalt to be recovered, however, the stability as a sulfide that is formed in the sulfurization step S14 is low. Therefore, these metal impurities are not contained in a sulfide to be formed, and contained in a barren solution obtained by the removal of the formed sulfide. It is noted that the barren solution has a pH of around 1.0 to 3.0.

As described above, in the sulfurization step 14, a mixed sulfide of nickel and cobalt in which impurities are fewer contained, and a barren solution stabilized at a low level of the nickel concentration are formed and recovered. It is noted that the recovery method can be performed by a settling separation treatment for a slurry of the sulfide obtained by a sulfurization reaction using a settling separation apparatus such as a thickener, the sulfide that is a precipitate is separated and recovered from the bottom of the thickener, and the aqueous solution component is overflowed and recovered as a barren solution.

### <3-2. Neutralization treatment method>

As described above, a barren solution obtained through the sulfurization step S 14 of a hydrometallurgy method for a nickel oxide ore contains an ion of the impurity metals containing at least one or more of iron, magnesium, and manganese. Therefore, in the discharge of the barren solution, which is a process liquid discharged by a smelting method for the nickel, to the outside of the system, it is required that the acid in the barren solution is neutralized, and the neutralization treatment (final neutralization treatment) for the removal of the remaining metal ions in the barren solution is performed. Further, also in a case where the barren solution is repeatedly used in the above-described hydrometallurgy process, the barren solution is preferably subjected to a neutralization treatment in order to be in a state in which impurity components are reduced as much as possible.

Conventionally, the neutralization treatment for the barren solution has been performed, for example, by using a high alkaline neutralizing agent such as lime stone, and slaked lime in order to achieve the pH required for the neutralization. However, such a high alkaline neutralizing agent requires a complicated pretreatment and a pretreatment equipment when the used amount becomes large as the generated amount of the barren solution from the sulfurization step S14 is increased. Further, even if a neutralizing agent such as slaked lime, which is relatively advantageous in cost as compared with other neutralizing agents, is used, there is a problem that the affect degree on the finish cost is large when the used amount becomes enormous as the amount of the barren solution to be treated is increased.

Accordingly, in the present embodiment, in the neutralization treatment for a barren solution that is a process liquid generated in the smelting process, as the neutralizing agent, boiler ash that is obtained after combustion of a fluidized-bed boiler and is obtained by burning of a sulfur content derived from coal being a fuel while adding lime stone to the sulfur content and desulfurizing the sulfur content, that is, boiler ash after in-furnace desulfurization is used.

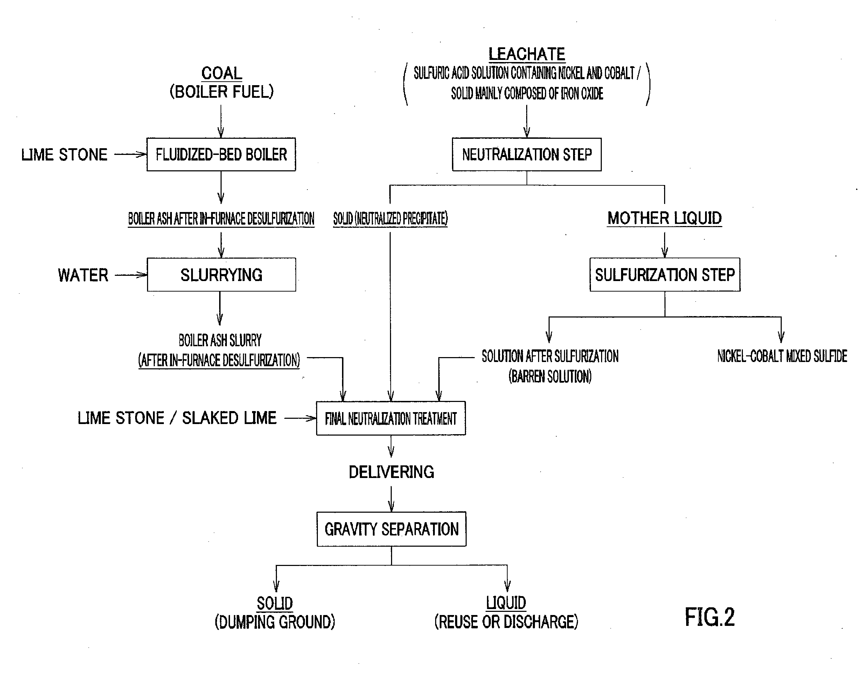

Fig. 2 is a flow chart showing a flow of a final neutralization treatment for a barren solution (process liquid) that is a solution after sulfurization obtained in a hydrometallurgy process of nickel, by using the boiler ash after in-furnace desulfurization generated from a fluidized-bed boiler as a neutralizing agent.

As shown in the flow chart of Fig. 2, a barren solution recovered after a sulfurization treatment is transferred and charged into a neutralization tank for the final neutralization treatment. On the other hand, in the neutralization tank, slaked lime or lime stone is charged and added as a neutralizing agent for the neutralization treatment. At this time, as the neutralizing agent, boiler ash after in-furnace desulfurization, which is generated from a fluidized-bed boiler, is charged and added as part of the neutralizing agent together with the slaked lime or lime stone.

The boiler ash after in-furnace desulfurization to be used as part of the neutralizing agent is the boiler ash obtained by the charging and burning of the lime stone that is used together with the coal being a boiler fuel for a desulfurization treatment for the coal, in the furnace of a boiler of a fluidized bed system. As described above, in the boiler ash after the in-furnace desulfurization, the Ca content derived from the lime stone used for the desulfurization treatment remains, therefore, based on the remained Ca, the boiler ash can effectively be used as a neutralizing agent for a neutralization treatment for a barren solution.

Herein, the additive amount of the boiler ash used for a neutralizing agent is not particularly limited, and can appropriately be determined depending on the amount of a process liquid to be subjected to the treatment, the acid concentration in the process liquid, the content of impurity components, and the like. Further, the upper limit of the additive amount is not also particularly limited, and the amount of the neutralizing agent to be used such as slaked lime, which is added at the same time, can more effectively be reduced as the additive amount of the boiler ash is increased.

Further, the boiler ash can be used even in a state of the ash by being added into a neutralization tank in a predetermined amount, however, is preferably used as a boiler ash slurry in a slurry state, which has been prepared in advance by the addition of water. As described above, by using a boiler ash slurry as a neutralizing agent, and by the addition into a neutralization tank before the neutralization of a process liquid or during the neutralization reaction, the handling property becomes easy, and further the unreacted Ca content in the boiler ash after in-furnace desulfurization can efficiently be utilized. In addition, by being in a slurry state, for example, automatic supply using a liquid transfer pump and the like can efficiently be performed.

Further, the slurry concentration of the boiler ash slurry is not particularly limited, however, is preferably less than 4.6% by weight, and more preferably 4.0% by weight or less. When the slurry concentration of the boiler ash slurry is 4.6% by weight or more, the viscosity of the slurry after neutralization treatment containing a neutralized product after the addition of the boiler ash slurry becomes high, and there may be a case where some influence exerts on the pumping for the transfer of the slurry after neutralization treatment to a delivering process and a gravity separation treatment, which are postprocesses. It is noted that when the slurry concentration is extremely low, there may be a case where the liquid amount in a neutralization tank is increased, and load is applied to the solid-liquid separation operation, or there may be a case where power consumption involved in the pump operation is increased. Therefore, the lower limit of the slurry concentration is preferably appropriately adjusted by taking the load amount of the solid-liquid separation operation and the power consumption of the pump, which are described above, and the like into consideration from the viewpoint of the operation management.

It is noted that the boiler ash added as a neutralizing agent is precipitated together with a neutralized precipitate generated in a neutralization treatment. Therefore, also in a case where the boiler ash is used as a neutralizing agent, no influence exerts on the clarity of the supernatant after the neutralization treatment, and adverse influence is not exerted in a solid-liquid separation treatment after the neutralization treatment, either.

As described above in detail, in the neutralization treatment method according to the present embodiment, in the final neutralization treatment for a process liquid generated in a metal smelting or hydrometallurgy process, boiler ash that is obtained after combustion of a fluidized-bed boiler and is obtained by burning of a sulfur content derived from coal being a fuel while adding lime stone to the sulfur content and desulfurizing the sulfur content is used as a neutralizing agent to perform a neutralization treatment.

According to such a neutralization treatment method, the amount of a neutralizing agent to be used such as slaked lime or lime stone can be effectively reduced, and an efficient treatment can be performed with the reduction of the neutralization treatment cost. Further, the used boiler ash is contained in a neutralized precipitate, therefore, the amount of the treatment waste generated from the fluidized-bed boiler can be reduced by the wasting together with the neutralized precipitate. Furthermore, as described above, by using the boiler ash as a neutralizing agent, the unreacted alkali content in the boiler ash is consumed, therefore, also in a case where the boiler ash is separately subjected to a waste treatment, the treatment cost for the neutralization of alkali content can drastically be reduced.

It is noted that it has been known that in the final neutralization treatment of which a flow chart is shown in Fig. 2, an efficient final neutralization treatment can be performed by a gradual neutralization treatment including the first stage neutralization treatment using lime stone as a neutralizing agent, and the second stage neutralization treatment using slaked lime as a neutralizing agent. Even in such a case, in each of the first stage neutralization treatment and the second stage neutralization treatment, by the addition of the above-described boiler ash as part of the neutralizing agent, each amount of the lime stone and slaked lime to be used is effectively reduced, and the total amount of the neutralizing agent to be used in the final neutralization treatment can be reduced.

Further, in the above-described embodiment, a neutralization treatment for a barren solution that is a process liquid generated in a smelting process of nickel is used as an example, however, the process liquid for which a neutralization treatment method according to the present embodiment is applied, is not limited to this, and as long as being an acid solution, any process liquids can suitably be used. In addition, the kinds of the heavy metals and acid contained in the process liquid are not also particularly limited, and various acid solutions can be applied as a treatment object.

### Examples

Hereinafter, Examples of the present invention will be described, however, the present invention is not limited to the following Examples.

### <Investigation of use of fluidized-bed boiler ash as neutralizing agent>

### [Example 1]

Boiler ash after in-furnace desulfurization, which had been generated by the addition of CaCO₃ (lime stone) with a weight ratio of 3.5% into coal with a sulfur grade of 0.5% while desulfurizing in the furnace by a fluidized-bed boiler, was slurried by the addition of water, and made into a boiler ash slurry with a slurry concentration of 25% by weight.

On the other hand, in a hydrometallurgy method for a nickel oxide ore (hydrometallurgy process of nickel), a sulfurization step in which a mixed sulfide containing nickel and cobalt is formed by the blowing of hydrogen sulfide gas into a mother liquid containing a sulfuric acid aqueous solution containing nickel and cobalt, iron, magnesium, manganese, and other impurity metals, which had been recovered through a leaching step, a solid-liquid separation step, and a neutralization step, was performed, and then a barren solution (process slurry) discharged from the sulfurization step was recovered.

In the final neutralization treatment at the discharging of the recovered process slurry to the outside of the system, a neutralization treatment in which impurity metals in the process slurry are removed while adjusting the pH of the solution, by using the prepared boiler ash slurry as a neutralizing agent was performed. Specifically, the process slurry was housed in a neutralization tank in the final neutralization step, a boiler ash slurry that is a neutralizing agent was added in an additive amount of 25 m³/hr, and further slaked lime was added at the same time to perform the neutralization treatment.

As a result, the additive amount of the slaked lime required for the increase of the pH of the process slurry at 800 m³/hr from 5.0 to 9.0 was 50.0 m³/hr, and the used amount of the slaked lime could be reduced as much as by 0.7 m³ per unit time as compared with the additive amount of 50.7 m³/hr in the conventional neutralization treatment in which slaked lime is only used as a neutralizing agent. Further, the reduction amount is equivalent to 174 kg (1.4%) in terms of slaked lime powder. As described above, it was found that the amount of slaked lime to be used, which is required for the neutralization of a process slurry, can be drastically reduced by a neutralization treatment in which boiler ash after in-furnace sulfurization is added into a process slurry using as part of the neutralizing agent.

It is noted that the clarity of the supernatant after the addition of the boiler ash was not different from that in a case where the boiler ash had not been added. From this, it was found that by using boiler ash as a neutralizing agent, the amount of a neutralizing agent to be used is reduced and a neutralization treatment can efficiently and effectively be performed without exerting influence on the clarity of the supernatant.

### <Investigation of additive amount of fluidized-bed boiler ash>

### [Examples 2 to 4]

Next, in Examples 2 to 4, the reduction effect of the amount of slaked lime to be used when the additive amount of a boiler ash slurry had been added was investigated.

Specifically, a neutralization treatment for a process slurry was performed in the same manner as in Example 1 except that each additive amount of the boiler ash slurries was set as 50 m³/hr (Example 2), 75 m³/hr (Example 3), and 100 m³/hr (Example 4), respectively.

As a result, it was found that each additive amount (used amount) of the slaked lime that had been added at the same time was 49.4 m³/hr (Example 2), 48.7 m³/hr (Example 3), and 48.0 m³/hr (Example 4), respectively, and the amount of the required slaked lime to be used can effectively be reduced as the additive amount of boiler ash is increased. Further, the measurement results of the used amounts of slaked lime in a case free from boiler ash, and in Examples 1 to 4 were shown in order in the following Table 2.

**[Table 2]**

| Example | Reference Example | 1 | 2 | 3 | 4 |
|---|---|---|---|---|---|
| Additive amount of boiler ash (m³/hr) | 0 | 25 | 50 | 75 | 100 |
| Used amount of slaked lime (m³/hr) | 50.7 | 50.0 | 49.4 | 48.7 | 48.0 |

### <Long-term operation of neutralization treatment using fluidized-bed boiler ash>

### [Example 5]

Next, in Example 5, a barren solution (process slurry) after a sulfurization step in a hydrometallurgy process of nickel was charged into a neutralization tank at a flow rate of 800 m³/hr, and a neutralization treatment for the process slurry was performed for 30 days by using boiler ash as a neutralizing agent. It is noted that the same boiler ash slurry as that in Example 1 was charged and added into a neutralization tank in an additive amount of 25 m³/hr, and slaked lime was also used as a neutralizing agent together with the boiler ash slurry.

As a result, the used amount of the slaked lime was 8823.6 t for 30 days in total. Since the used amount of the slaked lime when a neutralization treatment had been performed for 30 days by using only conventional slaked lime was 8948.9 t, therefore, a large amount of 125.3 t of the slaked lime could be reduced by a neutralization treatment over a long period of time by using the boiler ash slurry as part of a neutralizing agent.

### <Investigation of additive amount of fluidized-bed boiler ash and liquid transfer property of slurry after neutralization treatment>

### [Examples 6 to 15]

Next, in Examples 6 to 15, the liquid transfer property of the slurry after neutralization treatment (mixture slurry after neutralization treatment) obtained after a neutralization treatment when the slurry concentration of the boiler ash slurry was changed was investigated.

Specifically, in Examples 6 to 15, respectively, a neutralization treatment for a process slurry was performed by using a boiler ash slurry in which the slurry concentration had been changed as in the following Table 3, as part of a neutralizing agent, and the liquid transfer property of the slurry obtained after a neutralization treatment was investigated. It is noted that the liquid transfer property was investigated based on the influence on a pump when the slurry after neutralization treatment is transferred to a delivering process and a gravity separation treatment, which are postprocesses.

Measurement results of the liquid transfer property of the slurry after neutralization treatment are shown in the following Table 3. It is noted that in the evaluation of the liquid transfer property shown in the Table 3, "⊙" indicates that the viscosity of the slurry after neutralization treatment was low, and the transfer to a delivering process and a gravity separation treatment was favorable, "○" indicates that the viscosity was slightly increased, however, there was no possibility of exerting the influence on the pumping, and "Δ" indicates that the viscosity was increased until the influence on the pumping was exerted, and there was a possibility of generating defective transfer.

**[Table 3]**

| Example | Reference Example | 6 | 7 | 8 | 9 | 10 | 11 | 12 | 13 | 14 | 15 |
|---|---|---|---|---|---|---|---|---|---|---|---|
| Additive amount of boiler ash (m³/hr) | 0 | 0.5 | 0.9 | 1.4 | 1.8 | 2.3 | 2.8 | 3.2 | 3.7 | 4.0 | 4.6 |
| Used amount of slaked lime (m³/hr) | ⊙ | ⊙ | ⊙ | ⊙ | ⊙ | ⊙ | ○ | ○ | ○ | ○ | Δ |

As shown in Table 3, when the slurry concentration of the boiler ash slurry was up to 2.3% by weight, the viscosity of the slurry after neutralization treatment was not changed with or without the addition of boiler ash, and the transfer into a postprocessing could be performed favorably. On the other hand, when the slurry concentration was increased to higher than 2.3% by weight, the viscosity of the process slurry into which boiler ash had been added was increased, and when the slurry concentration of the boiler ash slurry was increased to 4.6% by weight or more, the viscosity was increased until the influence on the pumping was exerted.

Therefore, it was found that the slurry concentration of the boiler ash slurry used as a neutralizing agent is preferably less than 4.6% by weight, and more preferably 4.0% by weight or less.

## Claims

1. A neutralization treatment method for a liquid discharged in a metal smelting or hydrometallurgy process, comprising:
performing a neutralization treatment using as a neutralizing agent boiler ash being obtained after combustion of a fluidized-bed boiler and being obtained by burning of a sulfur content derived from coal being a fuel while adding lime stone to the sulfur content and desulfurizing the sulfur content.

2. The neutralization treatment method according to Claim 1, wherein
a boiler ash slurry being a slurry of the boiler ash is used as a neutralizing agent.

3. The neutralization treatment method according to Claim 2, wherein
the boiler ash slurry has a slurry concentration of 4.0 % by weight or less.

4. The neutralization treatment method according to Claim 1, wherein
the metal smelting or hydrometallurgy process is a hydrometallurgy process in which nickel and cobalt are recovered from a nickel oxide ore, and is used for a neutralization treatment for a solution after sulfurization treatment, which is obtained through a leaching step, a solid-liquid separation step, a neutralization step, and a sulfurization step.

5. A neutralizing agent used for a neutralization treatment for a liquid discharged in a metal smelting or hydrometallurgy process, comprising:
boiler ash being obtained after combustion of a fluidized-bed boiler and being obtained by burning of a sulfur content derived from coal being a fuel while adding lime stone to the sulfur content and desulfurizing the sulfur content.
